# FASCICULE DE BREVET EUROPEEN

(11) **EP 1 603 667 B1**
(45) Date de publication et mention de la délivrance du brevet: **13.07.2016**
(21) Numéro de dépôt: 04721217.0
(22) Date de dépôt: 17.03.2004
(51) Int. Cl.: B01J 21/06, B01J 23/10, B01J 35/00, B01J 37/03, B01D 53/94

(54) **COMPOSITION A BASE D OXYDE DE ZIRCONIUM ET D OXYDE DE C ERIUM A TEMPERATURE MAXIMALE DE REDUCTIBILITE REDUITE, SON PROCEDE DE PREPARATION ET SON UTILISATION COMME CATALYSEUR**
ZUSAMMENSETZUNG AUF BASIS VON ZIRCONOXID UND CEROXID MIT VERRINGERTER REDUZIERBARKEITSTEMPERATUR, VERFAHREN ZU IHRER HERSTELLUNG UND IHRE VERWENDUNG ALS KATALYSATOR
REDUCED MAXIMUM REDUCTIBILITY TEMPERATURE ZIRCONIUM OXIDE AND CERIUM OXIDE BASED COMPOSITION, METHOD FOR THE PRODUCTION AND USE THEREOF AS A CATALYST

(30) Priorité: 18.03.2003 FR 0303289
(43) Date de publication de la demande: 14.12.2005
(73) Titulaire: Rhodia Operations, 75009 Paris (FR)
(72) Inventeur: LARCHER, Olivier, F-17180 Pérégny (FR); ROHART, Emmanuel, F-17220 Sainte Soulle (FR)
(74) Mandataire: Senninger, Thierry
(86) Numéro de dépôt international: PCT/FR2004/000647
(87) Numéro de publication internationale: WO 2004/085806

(56) Documents cités:
- EP-A- 0 778 071
- WO-A-97/02213
- WO-A-98/45212
- WO-A-03/020643
- US-B1- 6 248 688

## Description

La présente invention concerne une composition à base d'oxyde de zirconium et d'oxyde de cérium à température maximale de réductibilité réduite, son procédé de préparation et son utilisation comme catalyseur.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs. Pour être efficaces, ces catalyseurs doivent présenter une surface spécifique importante même à température élevée.

Une autre qualité requise pour ces catalyseurs est la réductibilité. On entend par réductibilité, ici et pour le reste de la description, la capacité du catalyseur à se réduire en atmosphère réductrice et à se réoxyder en atmosphère oxydante. Cette réductibilité peut se mesurer par la capacité à capter l'hydrogène. Elle est due au cérium dans le cas des compositions du type de celles de l'invention, le cérium ayant la propriété de se réduire ou de s'oxyder. Cette réductibilité et, par conséquent, l'efficacité de catalyseur, sont maximales à une température qui est actuellement assez élevée pour les catalyseurs connus. Cette température est généralement de l'ordre de 600°C. Or, il existe un besoin en catalyseurs pour lesquels cette température soit abaissée et donc en catalyseurs dont les performances soient élevées, dans des gammes de températures plus faibles.

EP-A-778071 décrit des compositions à base d'oxydes de zirconium et de cérium qui sont obtenues par un procédé dans lequel on met en oeuvre un tensioactif essentiellement à l'étape de précipitation. Les produits obtenus présentent des températures maximales de réductibilité d'au moins 600°C.

WO 98/45212 A décrit aussi un procédé de préparation d'oxydes de cérium et de zirconium où un agent tensioactif est utilisé lors de la précipitation. Les produits obtenus présentent des températures maximales de réductibilité qui sont supérieures à 500°C.

WO 97/02213 A décrit des compositions à base d'oxydes de zirconium et de cérium à surface importante à température élevée. Ce document ne vise pas des compositions ayant des propriétés améliorées de réductibilité à basses températures et ne fait pas état de l'utilisation d'un agent tensioactif dans leur procédé de préparation.

US-B1-6 248 688 enseigne l'amélioration des propriétés de stockage de l'oxygène par l'utilisation d'un métal précieux dans des compositions à base d'oxydes de cérium et de zirconium. Ce document n'est pas concerné par la préparation de compositions dont les températures maximales de réductibilité soient abaissées.

WO 03/020643 A concerne des compositions à base d'oxydes de cérium, de zirconium et de lanthane dans des teneurs spécifiques. Ce document ne traite pas du problème de l'abaissement de la température maximale de réductibilité.

L'objet de l'invention est donc la mise au point d'un catalyseur à température de réductibilité réduite.

Dans ce but, la composition de l'invention est à base d'oxyde de zirconium et d'oxyde de cérium dans une proportion d'oxyde de zirconium d'au moins 50% en masse, et elle est caractérisée en ce qu'elle présente une température maximale de réductibilité d'au plus 500°C et une surface spécifique d'au moins 40 m²/g après calcination 6 heures à 500°C et en ce qu'elle est sous forme d'une phase tétragonale.

D'autres caractéristiques, détails et avantages de l'invention apparaîtront encore plus complètement à la lecture de la description qui va suivre, ainsi que d'exemples concrets mais non limitatifs destinés à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Par lanthanides, on entend les éléments du groupe constitué par les éléments de la classification périodique de numéro atomique compris inclusivement entre 57 et 71.

On précise pour la suite de la description que, sauf indication contraire, dans les fourchettes de valeurs qui sont données, les valeurs aux bornes sont incluses.

Les compositions de l'invention sont du type oxydes mixtes, à base d'oxyde de zirconium et qui comprennent en outre de l'oxyde de cérium. Elles peuvent comprendre aussi au moins un autre élément choisi parmi les lanthanides autres que le cérium. On peut donc avoir dans ce cas des compositions ternaires ou quaternaires notamment. L'élément précité peut être plus particulièrement choisi parmis le lanthane, le néodyme ou le praséodyme. On peut citer plus particulièrement les compositions à base de zirconium, de cérium, de praséodyme et de lanthane, celles à base de zirconium, de cérium, de néodyme et de lanthane et celles à base de zirconium, de cérium, de praséodyme et de néodyme.

Les compositions de l'invention ont une structure spécifique. Elles se présentent sous la forme d'une phase tétragonale. Plus précisément, la phase tétragonale est majoritaire. Par majoritaire on entend que l'intensité du pic de diffraction correspondant à la face cristalline (111) de la phase tétragonale de l'oxyde mixte de la composition est au moins égale à 1 fois l'intensité de la raie principale de toute autre phase présente, plus particulièrement au moins égale à 4 fois. On peut citer notamment comme autre phase de ce type l'oxyde de zirconium pur dans ses variétés tétragonale ou monoclinique, ou encore l'oxyde de cérium pur.

Cette structure est déterminée par analyse par diffraction RX sur un produit qui a subi une calcination à une température d'au moins 900°C, 6 heures.

Selon un mode de réalisation particulier, les compositions de l'invention peuvent se présenter sous la forme d'une solution solide pure de l'oxyde de cérium et, éventuellement, de l'autre élément. On entend par là que le cérium et, le cas échéant, l'autre élément sont présents totalement en solution solide dans le zirconium. Les spectres en diffraction RX de ces compositions révèlent en particulier, au sein de ces dernières, l'existence d'une phase unique clairement identifiable et correspondant à celle d'un oxyde de zirconium cristallisé dans le système tétragonal, traduisant ainsi l'incorporation du cérium et de l'autre élément dans le réseau cristallin de l'oxyde de zirconium, et donc l'obtention d'une solution solide vraie.

Les teneurs des différents constituants dans les compositions de l'invention peuvent varier. Ces teneurs sont exprimées ici et pour l'ensemble de la description en masse d'oxyde (ZrO₂, CeO₂, TR₂O₃, TR désignant le lanthanide autre que le cérium) par rapport à l'ensemble de la composition. La teneur en zirconium est d'au moins 50%, plus particulièrement d'au moins 65% et encore plus particulièrement d'au moins 70%. Pour le cérium, cette teneur est généralement inférieure à 50%, plus particulièrement d'au plus 40% et encore plus particulièrement d'au plus 25%. La teneur en l'autre élément éventuel est habituellement d'au plus 15% et elle peut être plus particulièrement d'au plus 10% et elle peut être comprise entre 3% et 10%. Dans le cas des compositions sous forme de solutions solides, les teneurs limites supérieures en terre(s) rare(s) autre(s) que le cérium ne sont en fait imposées que par la seule limite de solubilité de cet ou ces éléments dans l'oxyde de zirconium.

Les compositions de l'invention ont pour caractéristique essentielle le fait de présenter une température maximale de réductibilité d'au plus 500°C. Cette température maximale de réductibilité peut être d'au plus 480°C et encore plus particulièrement d'au plus 400°C. Ainsi, cette température maximale peut être comprise entre 300°C et 500°C et notamment entre 350°C et 450°C.

La réductibilité des compositions est déterminée par la mesure de leur capacité de captage de l'hydrogène en fonction de la température. On détermine aussi par cette mesure une température maximale de réductibilité qui correspond à la température à laquelle le captage de l'hydrogène est maximal et où, en d'autres termes, la réduction du cérium IV en cérium III est aussi maximale.

Les compositions de l'invention présentent aussi des caractéristiques de surface spécifique. En effet, tout en présentant une température maximale de réductibilité réduite, elles offrent en outre des surfaces spécifiques élevées même à hautes températures.

Ainsi, les compositions de l'invention possèdent une surface spécifique après calcination 6 heures sous air à 500°C qui est d'au moins 40 m²/g. Cette surface peut être d'au moins 60 m²/g, plus particulièrement d'au moins 70 m²/g et encore plus particulièrement d'au moins 80 m²/g après calcination à la même température sur la même durée. L'invention peut permettre l'obtention de compositions présentant toujours à cette même température et sur la même durée une surface pouvant atteindre au moins 89 m²/g.

A température encore plus élevée, les compositions de l'invention présentent une surface spécifique d'au moins 30 m²/g après calcination 6 heures à 900°C, cette surface pouvant être d'au moins 45 m²/g. L'invention peut permettre l'obtention de compositions présentant toujours à cette même température et sur la même durée une surface pouvant atteindre au moins 53 m²/g.

Enfin, des surfaces spécifiques d'au moins 25 m²/g, voire d'au moins 30 m²/g peuvent être atteintes après calcination 6 heures à 1000°C. L'invention peut permettre l'obtention de compositions présentant toujours à cette même température et sur la même durée une surface pouvant atteindre au moins 40 m²/g.

Une caractéristique préférentielle des compositions de l'invention est qu'elles sont exemptes de soufre. On entend par là que la teneur en soufre est inférieure à 200ppm, de préférence inférieure à 100ppm. Cette teneur est exprimée en masse de sulfate (SO₄) par rapport à l'ensemble de la composition.

On notera enfin que les compositions de l'invention présentent, comme indiqué plus haut, une température maximale de réductibilité faible tout en pouvant être exemptes de tout métal du type susceptible d'activer l'hydrogène à des températures basses, c'est à dire inférieures à 300°C, comme les métaux nobles (platine, palladium, ruthénium, rubidium, iridium, or, argent, manganèse, bismuth) ou encore les métaux du groupe VIII comme le nickel et le fer.

Le procédé de préparation des compositions de l'invention va maintenant être décrit.

Ce procédé est caractérisé en ce qu'il comprend les étapes suivantes :
- (a) on forme un mélange comprenant des composés de zirconium, de cérium et, éventuellement, d'un élément précité;
- (b) on met en présence ledit mélange avec un composé basique ce par quoi on obtient un précipité;
- (c) on chauffe en milieu aqueux ledit précipité; puis
- (d) soit on ajoute d'abord un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés au milieu issu de l'étape précédente et on sépare ensuite éventuellement ledit précipité;
- (d') soit on sépare d'abord ledit précipité et on ajoute ensuite ledit additif au précipité;
- (e) on soumet à un broyage le précipité obtenu à l'étape précédente (d) ou (d');
- (f) on calcine le précipité ainsi obtenu.

La première étape du procédé consiste donc à préparer un mélange en milieu liquide d'un composé du zirconium, d'un composé du cérium et éventuellement d'au moins un composé de l'élément précité supplémentaire.

Le mélange se fait généralement dans un milieu liquide qui est l'eau de préférence.

Les composés sont de préférence des composés solubles. Ce peut être notamment des sels de zirconium, de cérium et de lanthanide. Ces composés peuvent être choisis parmi les nitrates, les sulfates, les acétates, les chlorures, les nitrates céri-ammoniacaux.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou nitrates céri-ammoniacaux par exemple, qui conviennent ici particulièrement bien. On peut utiliser du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, en particulier, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en oeuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient un composé du cérium dans lequel celui-ci est sous forme de Ce III, il est préférable de faire intervenir dans le cours du procédé un agent oxydant, par exemple de l'eau oxygénée. Cet agent oxydant peut être utilisé en étant ajouté au milieu réactionnel lors de l'étape (a) ou lors de l'étape (b), notamment à la fin de celle-ci.

II est aussi possible d'utiliser un sol comme composé de départ du zirconium ou du cérium. Par sol on désigne tout système constitué de fines particules solides de dimensions colloïdales, c'est à dire des dimensions comprises entre environ 1 nm et environ 500nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape du procédé, on met en présence ledit mélange avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique est généralement utilisé sous forme d'une solution aqueuse.

La manière d'effectuer la mise en présence du mélange et de la solution, c'est à dire l'ordre d'introduction de ceux-ci n'est pas critique. Toutefois, cette mise en présence peut se faire en introduisant le mélange dans la solution du composé basique. Cette variante est préférable pour obtenir les compositions sous forme de solutions solides.

La mise en présence ou la réaction entre le mélange et la solution, notamment l'addition du mélange dans la solution du composé basique, peut être effectuée en une seule fois, graduellement ou en continu, et elle est de préférence réalisée sous agitation. Elle est de préférence conduite à température ambiante.

L'étape suivante du procédé est l'étape de chauffage du précipité en milieu aqueux.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. L'opération de chauffage peut être conduite en introduisant le milieu liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Le milieu soumis au chauffage présente généralement un pH d'au moins 5. De préférence, ce pH est basique, c'est à dire qu'il est supérieur à 7 et, plus particulièrement, d'au moins 8.

In est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante du procédé peut se faire selon deux variantes.

Selon une première variante, on ajoute au milieu réactionnel issu de l'étape précédente un additif qui est choisi parmi les tensioactifs anioniques, les tensioactifs non ioniques, les polyéthylène-glycols, les acides carboxyliques et leurs sels et les tensioactifs du type éthoxylats d'alcools gras carboxyméthylés En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés ou propoxylés, notamment ceux de la marque ALKAMULS^{®}, les sarcosinates de formule R-C(O)N(CH₃)CH₂COO⁻, les bétaïnes de formule RR'NH-CH₃-COO⁻, R et R' étant des groupes alkyles ou alkylaryles, les esters phosphates, notamment ceux de la marque RHODAFAC^{®}, les sulfates comme les sulfates d'alcool les sulfates d'éther alcool et les éthoxylats d'alcanolamide sulfatés, les sulfonates comme les sulfosuccinates, les alkyl benzène ou alkyl naphtalène sulfonates. On notera toutefois que les tensio-actifs contenant du soufre ne seront pas utilisés dans le cas de la préparation des compositions exemptes de soufre qui ont été décrites plus haut.

Comme tensioactif non ionique on peut mentionner les tensioactifs acétyléniques, les alcools gras éthoxylés ou propoxylés, par exemple ceux des marques RHODASURF^{®} ou ANTAROX^{®}, les alcanolamides, les oxydes d'amine, les alcanolamides éthoxylés, les amines éthoxylées ou propoxylées à longues chaînes, par exemple ceux de la marque RHODAMEENO, les copolymères oxyde d'éthylène/oxide de propylène, les dérivés du sorbitan, l'éthylène glycol, le propylène glycol, le glycérol, les esters polyglyceryle et leurs dérivés éthoxylés, les alkylamines, les alkylimidazolines, les huiles éthoxylées et les alkylphénols éthoxylés ou propoxylés, notamment ceux de la marque IGEPAL^{®}. On peut citer aussi en particulier les produits cités dans WO-98/45212 sous les marques IGEPAL^{®}, DOWANOL^{®}, RHODAMOX^{®} et ALKAMIDE°.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique, stéarique, hydroxystéarique, éthyl-2-hexanoïque et béhénique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH.

Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

Après l'addition du tensio-actif, on sépare éventuellement le précipité du milieu liquide par tout moyen connu.

Une autre variante consiste à séparer d'abord le précipité issu de l'étape (c) puis à ajouter l'additif tensioactif à ce précipité.

La quantité de tensio-actif utilisée, exprimée en pourcentage en poids d'additif par rapport au poids de la composition calculé en oxyde, est généralement comprise entre 5% et 100% plus particulièrement entre 15% et 60%.

L'étape suivante du procédé consiste à soumettre à un broyage le précipité obtenu à l'étape précédente.

Ce broyage peut être réalisé de différentes manières.

Une première manière consiste à réaliser un broyage à haute énergie du type broyage humide. Un tel broyage se fait sur le précipité humide qui a été obtenu soit à l'issue de l'étape (d') soit à l'issue de l'étape (d) dans le cas où ce précipité a bien été séparé de son milieu liquide d'origine. Le broyage humide peut se faire dans un broyeur à billes par exemple.

Une seconde manière consiste à effectuer un broyage à énergie moyenne en soumettant à un cisaillement une suspension du précipité, par exemple en utilisant un broyeur colloïdal ou une turbine d'agitation. Cette suspension peut être une suspension aqueuse qui a été obtenue après remise en dispersion dans l'eau du précipité obtenu à l'issue des étapes (d) ou (d'). Ce peut être aussi la suspension directement obtenue à la fin de l'étape (d) après l'addition du tensioactif sans qu'il y ait eu une séparation du précipité du milieu liquide.

A l'issue du broyage, le produit obtenu peut éventuellement être séché, par exemple par passage dans une étuve.

La dernière étape du procédé est une étape de calcination.

Cette calcination permet de développer la cristallinité du produit obtenu, et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée.

Selon un premier mode de réalisation, la calcination a lieu sous atmosphère oxydante, par exemple sous air. Dans ce cas, la calcination se fait généralement à une température comprise entre 300 et 1000°C sur une durée qui est généralement d'au moins 30 minutes.

Selon un second mode de réalisation, et ce mode de réalisation est tout particulièrement préféré lorsque le broyage mis en oeuvre à l'étape précédente (e) est un broyage à énergie moyenne, la calcination se fait sous balayage d'un gaz inerte dans un premier temps puis sous atmosphère oxydante dans un second temps.

Dans ce cas, le gaz inerte peut être plus particulièrement l'azote. Cette première calcination se fait alors à une température qui est comprise généralement entre 800°C et 1000°C sur une durée d'au moins 1 heure. La calcination sous atmosphère oxydante se fait à une température qui peut être comprise entre 300°C et 700°C pendant au moins 30 minutes.

Les compositions de l'invention telles que décrites plus haut ou telles qu'obtenues par le procédé mentionné précédemment se présentent sous forme de poudres mais elles peuvent éventuellement être mises en forme pour se présenter sous forme de granulés, billes, cylindres ou nids d'abeille de dimensions variables. Ces compositions peuvent être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques. Ces systèmes catalytiques peuvent comprendre un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisables, dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx.

Dans le cas de ces utilisations en catalyse, les compositions de l'invention peuvent être employées en combinaison avec des métaux précieux. La nature de ces métaux et les techniques d'incorporation de ceux-ci dans ces compositions sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante.

De ce fait, l'invention concerne aussi l'utilisation d'une composition ou d'un système catalytique tels que décrits plus haut à la fabrication de catalyseur pour post combustion automobile.

Des exemples concrets mais non limitatifs vont maintenant être donnés.

Dans ces exemples, le taux de réductibilité qui est donné représente le pourcentage de cérium réduit, étant entendu qu'1/2 mole d'H₂ consommée et mesurée par la méthode précisée ci-dessous correspond à 1 mole de CelV réduit.

La mesure de réductibilité est faite par réduction programmée en température de la manière suivante. On utilise un appareil MI-100 Altamira avec un réacteur en silice et un échantillon de 200mg qui a été préalablement calciné 10 heures à 1000°C sous air. Le gaz est l'hydrogène à 10% en volume dans l'argon et avec un débit de 30ml/mn. La montée en température se fait de l'ambiante à 900°C à raison de 10°C/mn. La détection du signal se fait avec un détecteur de conductivité thermique à 70mA. Le captage de l'hydrogène est calculé à partir de la surface manquante du signal d'hydrogène de la ligne de base à la température ambiante à la ligne de base à 900°C. La température maximale de réductibilité telle que définie plus haut est mesurée à l'aide d'un thermocouple placé au coeur de l'échantillon.

### EXEMPLE 1

Cet exemple concerne la préparation d'une composition dont les teneurs exprimées en pourcentages massiques sont de 72% en oxyde de zirconium, 21% en oxyde de cérium, 2% en oxyde de lanthane et 5% en oxyde de néodyme.

Dans un bécher agité, on introduit 900 ml de nitrate de zirconium (80g/l), 42,3 ml de nitrate de cérium à l'état d'oxydation III (496 g/l), 4,4 ml de nitrate de lanthane (454 g/l) et 9,5 ml de nitrate de néodyme (524 g/l). On complète ensuite avec de l'eau distillée de façon à obtenir 1 litre d'une solution de ces nitrates.

Dans un réacteur agité, on introduit 250 ml d'une solution d'ammoniaque (12 mol/l), 74 ml d'eau oxygénée (110 volumes) et on complète ensuite avec de l'eau distillée de façon à obtenir un volume total de 1 litre.

La solution de nitrates est introduite en une heure dans le réacteur sous agitation constante de manière à obtenir une suspension.

La suspension obtenue est placée dans un autoclave en acier inoxydable équipé d'un mobile d'agitation. La température du milieu est portée à 150°C pendant 2 heures sous agitation.

La suspension ainsi obtenue est alors filtrée sur Büchner. On récupère un précipité de couleur jaune pâle contenant 20 % en masse d'oxyde.

On prélève 76 g de ce précipité, que l'on place dans un broyeur à billes (Molinex PE 075 de marque Netzch).

Parallèlement, on a préparé un gel de laurate d'ammonium dans les conditions suivantes : on introduit 250 g d'acide laurique dans 135 ml d'ammoniaque (12 mol/l) et 500 ml d'eau distillée, puis on homogénéise à l'aide d'une spatule.

24 g de ce gel sont ajoutés au précipité dans le broyeur à billes. On complète avec 100 ml d'eau distillée et 250 ml de billes de zircone (diamètre compris entre 0,4 et 0,7 mm). L'ensemble est broyé à 1500 tr/min pendant 60 minutes.

Le précipité est ensuite lavé sur un tamis pour récupération des billes de broyage. La suspension obtenue est alors séchée à l'étuve à 60°C pendant 24 heures. Le produit séché est ensuite porté à 900°C, sous air, pendant 4 heures en palier.

Les caractéristiques du produit sont données dans le tableau 1 ci-dessous.

**Tableau 1**

| Surface | |
|---|---|
| 6h 500°C | 83 m²/g |
| 6h 900°C | 50 m²/g |
| 6h 1000°C | 38 m²/g |
| Température maximale de réductibilité | 475°C |
| Taux de réductibilité | 80% |
| Structure | phase tétragonale à 100% |

### EXEMPLE 2

On prépare une composition présentant les mêmes teneurs en oxydes de zirconium, de cérium, de lanthane et de néodyme que dans l'exemple 1.

On procède comme dans l'exemple 1 jusqu'au traitement de la suspension dans l'autoclave. Après refroidissement à température ambiante à l'issue de ce traitement, on prélève 500ml de la suspension. On y ajoute 8g d'acide laurique. Après homogénéisation, on soumet le mélange obtenu à un cisaillement avec un appareil Ultraturax^{®} à une vitesse de 1000tr/min pendant 15 minutes.

La suspension obtenue est ensuite filtrée sur un Buchner. Le solide obtenu est séché à l'étuve à 50°C pendant 12 heures. Le produit séché est disposé dans un réacteur tubulaire à quartz. Une calcination en lit traversé est ensuite réalisée sous azote avec un débit de 100cm³/min. La température est de 900°C et la durée de la calcination est de 4 heures. A l'issue de cette calcination, on revient à la température ambiante sous azote. On effectue ensuite une deuxième calcination à 500°C deux heures en palier sous une atmosphère à 10% d'oxygène dans l'azote.

Les caractéristiques du produit sont données dans le tableau 2 ci-dessous.

**Tableau 2**

| Surface | |
|---|---|
| 6h 500°C | 84 m²/g |
| 6h 900°C | 46 m²/g |
| 6h 1000°C | 37 m²/g |
| Température maximale de réductibilité | 375°C |
| Taux de réductibilité | 80% |
| Structure | phase tétragonale à 100% |

## Revendications

1. Composition à base d'oxyde de zirconium et d'oxyde de cérium dans une proportion d'oxyde de zirconium d'au moins 50% en masse, **caractérisée en ce qu'**elle présente une température maximale de réductibilité d'au plus 500°C et une surface spécifique d'au moins 40 m²/g après calcination 6 heures à 500°C et **en ce qu'**elle est sous forme d'une phase tétragonale.

2. Composition selon la revendication 1, **caractérisée en ce qu'**elle comprend en outre au moins un autre élément choisi parmi les lanthanides autres que le cérium.

3. Composition selon la revendication 2, **caractérisée en ce qu'**elle comprend au moins un lanthanide choisi parmi le lanthane, le néodyme et le praséodyme.

4. Composition selon l'une des revendications précédentes, **caractérisée en ce qu'**elle présente une proportion en oxyde de zirconium d'au moins 65%, plus particulièrement d'au moins 70% en masse.

5. Composition selon l'une des revendications précédentes, **caractérisée en ce qu'**elle présente une température maximale de réductibilité d'au plus 480°C, plus particulièrement d'au plus 400°C.

6. Composition selon l'une des revendications précédentes, **caractérisée en ce qu'**elle présente une surface spécifique d'au moins 70 m²/g, plus particulièrement d'au moins 80 m²/g après calcination 6 heures à 500°C.

7. Composition selon l'une des revendications précédentes, **caractérisée en ce qu'**elle présente une surface spécifique d'au moins 30 m²/g après calcination 6 heures à 900°C.

8. Composition selon l'une des revendications précédentes, **caractérisée en ce qu'**elle présente une surface spécifique d'au moins 45 m²/g après calcination 6 heures à 900°C.

9. Composition selon l'une des revendications précédentes, **caractérisée en ce qu'**elle présente une surface spécifique d'au moins 25 m²/g après calcination 6 heures à 1000°C.

10. Composition selon l'une des revendications précédentes, **caractérisée en ce qu'**elle se présente sous forme d'une solution solide du cérium, avec éventuellement l'autre élément précité, dans l'oxyde de zirconium.

11. Composition selon l'une des revendications précédentes, **caractérisée en ce qu'**elle présente une proportion en masse en oxyde de cérium inférieure à 50%, plus particulièrement d'au plus 40% et encore plus particulièrement d'au plus 25%.

12. Procédé de préparation d'une composition selon l'une des revendications précédentes, **caractérisé en ce qu'**il comprend les étapes suivantes :
- (a) on forme un mélange comprenant des composés de zirconium, de cérium et, éventuellement, d'un autre élément choisi parmi les lanthanides autres que le cérium;
- (b) on met en présence ledit mélange avec un composé basique ce par quoi on obtient un précipité;
- (c) on chauffe en milieu aqueux ledit précipité à une température d'au moins 100°C; puis
- (d) soit on ajoute d'abord un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés au milieu issu de l'étape précédente et on sépare ensuite éventuellement ledit précipité;
- (d') soit on sépare d'abord ledit précipité et on ajoute ensuite ledit additif au précipité;
- (e) on soumet à un broyage le précipité obtenu à l'étape précédente;
- (f) on calcine le précipité ainsi obtenu.

13. Procédé selon la revendication 12, caractérisé en de qu'on calcine le précipité soit sous atmosphère oxydante soit sous gaz inerte dans un premier temps puis sous atmosphère oxydante dans un second temps.

14. Procédé selon la revendication 12 ou 13, **caractérisé en ce qu'**on utilise comme composés du zirconium, du cérium et de l'élément précité un composé choisi parmi les nitrates, les acétates, les chlorures, les nitrates céri-ammoniacaux.

15. Procédé selon l'une des revendications 12 à 14 **caractérisé en ce qu'**on utilise un sol comme composé du zirconium ou du cérium.

16. Procédé selon l'une des revendications 12 à 15, **caractérisé en ce qu'**on utilise dans le mélange de l'étape (a) un composé du cérium dans lequel celui-ci est sous forme de Ce III et on ajoute un agent oxydant lors de l'étape (a) ou lors de l'étape (b), notamment à la fin de celle-ci.

17. Procédé selon l'une des revendications 12 à 16, **caractérisé en ce que** la mise en présence du mélange précité avec un composé basique lors de l'étape (b) se fait en introduisant ledit mélange dans une solution de ce composé basique.

18. Procédé selon l'une des revendications 12 à 17, **caractérisé en ce qu'**on met en oeuvre un broyage humide.

19. Procédé selon l'une des revendications 12 à 17, **caractérisé en ce qu'**on effectue le broyage en soumettant à un cisaillement une suspension du précipité.

20. Système catalytique, **caractérisé en ce qu'**il comprend une composition selon l'une des revendications 1 à 11.

21. Procédé de traitement des gaz d'échappement des moteurs à combustion interne, **caractérisé en ce qu'**on utilise à titre de catalyseur un système catalytique selon la revendication 20 ou une composition selon l'une des revendications 1 à 11.

## Patentansprüche

1. Zusammensetzung auf Basis von Zirconiumoxid und Ceroxid mit einem Anteil von Zirconiumoxid von mindestens 50 Gew.-%, **dadurch gekennzeichnet, dass** sie eine maximale Reduzierbarkeitstemperatur von höchstens 500 °C und eine spezifische Fläche von mindestens 40 m²/g nach Kalzinierung von 6 Stunden bei 500 °C aufweist, und dass sie in Form einer tetragonalen Phase vorhanden ist.

2. Zusammensetzung nach Anspruch 1, **dadurch gekennzeichnet, dass** sie ferner mindestens ein weiteres Element umfasst, das unter den anderen Lanthaniden als Cer ausgewählt ist.

3. Zusammensetzung nach Anspruch 2, **dadurch gekennzeichnet, dass** sie mindestens ein Lanthanid umfasst, das unter Lanthan, Neodym und Praseodym ausgewählt ist.

4. Zusammensetzung nach einem der vorhergehenden Ansprüche, **dadurch gekennzeichnet, dass** sie einen Anteil an Zirconiumoxid von mindestens 65 Gew.-%, insbesondere von mindestens 70 Gew.-%, aufweist.

5. Zusammensetzung nach einem der vorhergehenden Ansprüche, **dadurch gekennzeichnet, dass** sie eine maximale Reduzierbarkeitstemperatur von höchstens 480 °C, insbesondere von höchstens 400 °C, aufweist.

6. Zusammensetzung nach einem der vorhergehenden Ansprüche, **dadurch gekennzeichnet, dass** sie eine spezifische Fläche von mindestens 70 m²/g, insbesondere von mindestens 80 m²/g, nach Kalzinierung von 6 Stunden bei 500 °C aufweist.

7. Zusammensetzung nach einem der vorhergehenden Ansprüche, **dadurch gekennzeichnet, dass** sie eine spezifische Fläche von mindestens 30 m²/g nach Kalzinierung von 6 Stunden bei 900 °C aufweist.

8. Zusammensetzung nach einem der vorhergehenden Ansprüche, **dadurch gekennzeichnet, dass** sie eine spezifische Fläche von mindestens 45 m²/g nach Kalzinierung von 6 Stunden bei 900 °C aufweist.

9. Zusammensetzung nach einem der vorhergehenden Ansprüche, **dadurch gekennzeichnet, dass** sie eine spezifische Fläche von mindestens 25 m²/g nach Kalzinierung von 6 Stunden bei 1000 °C aufweist.

10. Zusammensetzung nach einem der vorhergehenden Ansprüche, **dadurch gekennzeichnet, dass** sie in Form einer festen Lösung des Cers mit eventuell dem anderen vorgenannten Element in Zirconiumoxid vorhanden ist.

11. Zusammensetzung nach einem der vorhergehenden Ansprüche, **dadurch gekennzeichnet, dass** sie einen Massenanteil von Ceroxid unter 50 %, insbesondere von höchstens 40 % und noch bevorzugter von höchstens 25 %, aufweist.

12. Verfahren zur Herstellung einer Zusammensetzung nach einem der vorhergehenden Ansprüche, **dadurch gekennzeichnet, dass** es die folgenden Schritte umfasst:
- (a) Bildung eines Gemisches, umfassend Zusammensetzungen von Zirconium, Cer und eventuell eines weiteren Elements, das unter den anderen Lanthaniden als Cer ausgewählt ist;
- (b) Zusammenbringen des Gemisches mit einer basischen Verbindung, wodurch ein Niederschlag erhalten wird;
- (c) Erhitzen des Niederschlags im wässerigen Medium auf eine Temperatur von mindestens 100 °C; dann
- (d) entweder zuerst Hinzufügen eines Zusatzstoffes, ausgewählt unter den anionischen Tensiden, den nicht ionischen Tensiden, den Polyethylenglykolen, den Carbonsäuren und ihren Salzen und den Tensiden vom Typ Ethoxylate von Carboxymethyl-Fettalkoholen in dem Medium, das sich aus dem vorhergehenden Schritt ergibt, und dann eventuell Abtrennen des Niederschlags;
- (d') oder zuerst Abtrennen des Niederschlags und sodann Hinzufügen des Zusatzstoffes zu dem Niederschlag;
- (e) Unterziehen des in dem vorhergehenden Schritt erhaltenen Niederschlags einer Zerkleinerung;
- (f) Kalzinieren des so erhaltenen Niederschlags.

13. Verfahren nach Anspruch 12, **dadurch gekennzeichnet, dass** der Niederschlag entweder unter oxidierender Atmosphäre oder unter inertem Gas in einem ersten Schritt und dann unter oxidierender Atmosphäre in einem zweiten Schritt kalziniert wird.

14. Verfahren nach Anspruch 12 oder 13, **dadurch gekennzeichnet, dass** als Verbindungen des Zirconiums, des Cers und des vorgenannten Elements eine Verbindung verwendet wird, ausgewählt unter den Nitraten, den Acetaten, den Chloriden, den Cer-Ammoniak-Nitraten.

15. Verfahren nach einem der Ansprüche 12 bis 14, **dadurch gekennzeichnet, dass** ein Sol als Verbindung des Zirconiums oder des Cers verwendet wird.

16. Verfahren nach einem der Ansprüche 12 bis 15, **dadurch gekennzeichnet, dass** in dem Gemisch des Schrittes (a) eine Verbindung des Cers verwendet wird, in dem dieses in Form von Ce III vorhanden ist, und ein Oxidationsmittel während des Schrittes (a) oder des Schrittes (b), insbesondere am Ende desselben, hinzugefügt wird.

17. Verfahren nach einem der Ansprüche 12 bis 16, **dadurch gekennzeichnet, dass** das Zusammenbringen des vorgenannten Gemisches mit einer basischen Verbindung während des Schrittes (b) durch Einleiten des Gemisches in eine Lösung dieser basischen Verbindung erfolgt.

18. Verfahren nach einem der Ansprüche 12 bis 17, **dadurch gekennzeichnet, dass** ein Nassmahlen eingesetzt wird.

19. Verfahren nach einem der Ansprüche 12 bis 17, **dadurch gekennzeichnet, dass** das Mahlen erfolgt, indem eine Suspension des Niederschlags einer Scherbeanspruchung ausgesetzt wird.

20. Katalytisches System, **dadurch gekennzeichnet, dass** es eine Zusammensetzung nach einem der Ansprüche 1 bis 11 umfasst.

21. Verfahren zur Behandlung der Abgase von Verbrennungsmotoren, **dadurch gekennzeichnet, dass** als Katalysator ein katalytisches System nach Anspruch 20 oder eine Zusammensetzung nach einem der Ansprüche 1 bis 11 verwendet wird.

## Claims

1. Composition based on zirconium oxide and cerium oxide with a zirconium oxide proportion of at least 50% by weight, **characterized in that** it has a maximum reducibility temperature of at most 500°C and a specific surface area of at least 40 m²/g after calcination for 6 hours at 500°C and **in that** it is in the form of a tetragonal phase.

2. Composition according to Claim 1, **characterized in that** it furthermore includes at least one other element chosen from lanthanides other than cerium.

3. Composition according to Claim 2, **characterized in that** it includes at least one lanthanide chosen from lanthanum, neodymium and praseodymium.

4. Composition according to one of the preceding claims, **characterized in that** it has a zirconium oxide proportion of at least 65% by weight, more particularly at least 70% by weight.

5. Composition according to one of the preceding claims, **characterized in that** it has a maximum reducibility temperature of at most 480°C, more particularly at most 400°C.

6. Composition according to one of the preceding claims, **characterized in that** it has a specific surface area of at least 70 m²/g, more particularly at least 80 m²/g, after calcination at 500°C for 6 hours.

7. Composition according to one of the preceding claims, **characterized in that** it has a specific surface area of at least 30 m²/g after calcination at 900°C for 6 hours.

8. Composition according to one of the preceding claims, **characterized in that** it has a specific surface area of at least 45 m²/g after calcination at 900°C for 6 hours.

9. Composition according to one of the preceding claims, **characterized in that** it has a specific surface area of at least 25 m²/g after calcination at 1000°C for 6 hours.

10. Composition according to one of the preceding claims, **characterized in that** it is in the form of a solid solution of cerium, optionally with the other aforementioned element, in zirconium oxide.

11. Composition according to one of the preceding claims, **characterized in that** it has a cerium oxide proportion by weight of less than 50%, more particularly at most 40% and even more particularly at most 25%.

12. Method of preparing a composition according to one of the preceding claims, **characterized in that** it comprises the following steps:
- (a) a mixture comprising a zirconium compound, a cerium compound and, optionally, a compound of element chosen from lanthanides other than cerium, is formed;
- (b) said mixture is brought into contact with a basic compound, by means of which a precipitate is obtained;
- (c) said precipitate is heated in aqueous medium to a temperature of at least 100°C; then
- (d) either firstly an additive, chosen from anionic surfactants, nonionic surfactants, polyethylene glycols, carboxylic acids and their salts, and surfactants of the carboxymethylated fatty alcohol ethoxylate type in the medium resulting from the previous step, is added and then said precipitate is possibly separated;
- (d') or said precipitate is firstly separated and then said additive is added to the precipitate;
- (e) the precipitate obtained in the previous step is subjected to a milling operation; and
- (f) the precipitate thus obtained is calcined.

13. Method according to Claim 12, **characterized in that** the precipitate is calcined either in an oxidizing atmosphere or firstly in an inert gas and then secondly in an oxidizing atmosphere.

14. Method according to Claim 12 or 13, **characterized in that**, as zirconium compound, cerium compound and compound of the aforementioned element, a compound chosen from nitrates, acetates, chlorides and ceric ammonium nitrates is used.

15. Method according to one of Claims 12 to 14, **characterized in that** a sol is used as zirconium or cerium compound.

16. Method according to one of Claims 12 to 15, **characterized in that**, in the mixture of step (a), a cerium compound is used in which cerium is in the Ce(III) form and an oxidizing agent is added during step (a) or during step (b), especially at the end of the latter step.

17. Method according to one of Claims 12 to 16, **characterized in that** the aforementioned mixture is brought into contact with a basic compound during step (b) by introducing said mixture into a solution of this basic compound.

18. Method according to one of Claims 12 to 17, **characterized in that** a wet milling operation is carried out.

19. Method according to one of Claims 12 to 17, **characterized in that** the milling is carried out by subjecting a suspension of the precipitate to a shearing action.

20. Catalytic system, **characterized in that** it comprises a composition according to one of Claims 1 to 11.

21. Method of treating the exhaust gases of internal combustion engines, **characterized in that** a catalytic system according to Claim 20 or a composition according to one of Claims 1 to 11 is used as catalyst.
